# EUROPÄISCHE PATENTSCHRIFT

(11) **EP 3 308 006 B1**
(45) Veröffentlichungstag und Bekanntmachung des Hinweises auf die Patenterteilung: **10.04.2019**
(21) Anmeldenummer: 16736364.7
(22) Anmeldetag: 14.06.2016
(51) Int. Cl.: F02D 35/02, F02D 13/02, F02D 41/00

(54) **VERFAHREN ZUR KLOPFREGELUNG**
METHOD FOR KNOCK CONTROL
PROCÉDÉ DE RÉGULATION ANTICLIQUETIS

(30) Priorität: 15.06.2015 AT 3752015
(43) Veröffentlichungstag der Anmeldung: 18.04.2018
(73) Patentinhaber: GE Jenbacher GmbH & Co. OG, 6200 Jenbach (AT)
(72) Erfinder: SPYRA, Nikolaus, 6020 Innsbruck (AT); THALHAUSER, Josef, 83191 Nußdorf (DE); TRAPP, Christian, 6067 Absam (AT); TINSCHMANN, Georg, 6130 Schwaz (AT)
(74) Vertreter: Torggler & Hofinger Patentanwälte
(86) Internationale Anmeldenummer: PCT/AT2016/050199
(87) Internationale Veröffentlichungsnummer: WO 2016/201472

(56) Entgegenhaltungen:
- EP-A1- 0 854 280
- JP-A- 2001 159 338
- JP-A- 2011 122 544

## Beschreibung

Die Erfindung betrifft ein Verfahren zur Klopfregelung einer Brennkraftmaschine mit den Merkmalen des Oberbegriffs von Anspruch 1 sowie eine Brennkraftmaschine mit den Merkmalen des Oberbegriffs von Anspruch 5.

Zur Klopfregelung von Brennkraftmaschinen ist es bekannt, den Zündzeitpunkt als Stellgröße zu verwenden. Wird über einen Klopfsensor an einem Zylinder der Brennkraftmaschine Klopfen festgestellt, verändert die Klopfregelung den Zündzeitpunkt des betreffenden Zylinders für den nächsten Verbrennungszyklus nach spät, d.h. die Zündung des Kraftstoff-Luft-Gemisches in dem betreffenden Zylinder wird für den folgenden Verbrennungszyklus später ausgelöst als im vorangegangenen Verbrennungszyklus. Durch die Verstellung des Zündzeitpunktes nach spät (Retardieren des Zündzeitpunktes) wird der Verbrennungsschwerpunkt verschoben und so der betreffende Zylinder von der Klopfgrenze wegbewegt. Nachteilig an einer auf der Verstellung des Zündzeitpunktes beruhenden Klopfregelung ist es, dass der Wirkungsgrad der Brennkraftmaschine beeinträchtigt wird.

Die US 6,848,422 B2 (TOYOTA) beschreibt ein Verfahren zur Klopfregelung an einer Brennkraftmaschine, die mit einem variablen Ventiltrieb ausgestattet ist, wobei die Klopfregelung darin besteht, dass die Ventilöffnung des Einlassventils verzögert wird, wenn der Arbeitswinkel des Einlassventils kleiner als 180° ist. Außerhalb dieses Fensters erfolgt die Klopfregelung über Verstellung des Zündzeitpunktes.

Aus der WO 2008/000568 A1 (Siemens) ist ein Verfahren zur Klopfregelung bekannt, gemäß welchem bei als klopfend detektierten Zylindern der Brennkraftmaschine mittels eines dynamischen Luftbefüllungs-Aktuators (Impulslader) der Zylinder für den nächsten Verbrennungsvorgang mit einer geringeren Luftmasse als für den aktuellen Verbrennungsvorgang befüllt wird. Die Impulslader dienen der impulsartigen Luft-Befüllung der einzelnen Zylinder, indem Resonanzschwingungs- und Aufschaukeleffekte aus dem Luftmassenstrom im Saugrohr ausgenutzt werden. Die Impulslader-Aktoren werden zu denjenigen Zeitspannen geöffnet, während denen ein impulsartiger Luftmassenstrom durch den jeweiligen Einlasskanal strömt. Durch die geringere Zylinderfüllung, d.h. weniger Luftmassenzumessung im Brennraum des jeweiligen Zylinders, bei dem für den aktuellen Verbrennungsvorgang klopfen detektiert worden ist, wird erreicht, dass für die nachfolgenden Verbrennungszyklen die Klopfneigung des betreffenden Zylinders verringert wird. Nachteilig an diesem Verfahren ist, dass im Einlasstrakt der Brennkraftmaschine spezielle Luftbefüllungs-Aktuatoren zur Beeinflussung der Luftfüllung der einzelnen Zylinder vorgesehen sein müssen.

EP 0 854 280 beschreibt eine Brennkraftmaschine mit wenigstens einem Zylinder, dem zumindest ein Einlassventil zugeordnet ist, wobei bei Auftreten von Klopfen in wenigstens einem Zylinder durch Aktuieren des zu dem als klopfend erkannten Zylinder zugehörigen Einlassventils solchermaßen, dass die Temperatur der Ladung des als klopfend erkannten Zylinders gesenkt wird, das Klopfen in dem Zylinder reduziert wird, wobei das Aktuieren des zu dem als klopfend erkannten Zylinder zugehörigen Einlassventils ein früheres Schlissen dieses Einlassventils gegenüber dem letzten Verbrennungszyklus umfasst.

Aufgabe der vorliegenden Erfindung ist es, ein Verfahren zur Klopfregelung einer Brennkraftmaschine anzugeben, welches die Nachteile des Standes der Technik, insbesondere einen Wirkungsgradverlust, nicht aufweist. Auch soll eine entsprechende Brennkraftmaschine angegeben werden.

Gelöst werden diese Aufgaben durch ein Verfahren mit den Merkmalen des Anspruchs 1 bzw. einer Brennkraftmaschine mit den Merkmalen von Anspruch 4.

Indem bei Auftreten von Klopfen in wenigstens einem Zylinder durch Aktuieren des zu dem als klopfend erkannten Zylinder zugehörigen Einlassventils solchermaßen, dass die Temperatur der Ladung des als klopfend erkannten Zylinders gesenkt wird, das Klopfen in dem Zylinder reduziert wird, wird eine wirkungsvolle Klopfregelung realisiert, ohne dass die Brennkraftmaschine einen Wirkungsgradverlust erleidet.

Vorzugsweise wird die Temperatur der Ladung des als klopfend erkannten Zylinders für den nächsten Verbrennungszyklus gegenüber dem letzten Verbrennungszyklus gesenkt.

Bevorzugt ist vorgesehen, dass das Auftreten von Klopfen durch wenigstens einen Klopfsensor in dem wenigstens einen Zylinder festgestellt wird.

Der Klopfsensor kann bspw. als Körperschallsensor oder Zylinderdrucksensor ausgebildet sein.

Gemäss dem Stand der Technik ist vorgesehen, dass das Aktuieren des zu dem als klopfend erkannten Zylinder zugehörigen Einlassventils ein früheres Schließen umfasst, vorzugsweise ein früheres Schließen gegenüber dem letzten Verbrennungszyklus.

Gemäß der Variante gemäss dem Stand der Technik wird also bei einem als klopfend erkannten Zylinder das zugehörige Einlassventil, bspw. über einen variablen Ventiltrieb, im Einlasstakt früher geschlossen. Das frühere Schließen des Einlassventils im Einlasstakt bewirkt durch die (gegenüber dem vorhergegangenen Verdichtungstakt) vergrößerte adiabatische Expansion eine Kühlung der Zylinderladung. Durch diese Maßnahme wird die Spitzentemperatur der Zylinderladung gesenkt und somit Klopfen vermieden, ohne den Zündzeitpunkt zu verstellen.

Die Brennkraftmaschine umfasst eine gekühlte Abgasrückführung, über welche den Zylindern der Brennkraftmaschine über die Einlassventile gekühltes Abgas zugeführt werden kann, umfasst das Aktuieren des zu dem als klopfend erkannten Zylinder zugehörigen Einlassventils ein späteres Schließen, vorzugsweise ein späteres Schließen gegenüber dem letzten Verbrennungszyklus.

Es ist also vorgesehen, die Temperatur der Zylinderladung dadurch zu senken (und damit Klopfen zu vermeiden), indem dem betreffenden Zylinder eine vergrößerte Menge an gekühltem Abgas zugeführt wird. Daraus ergibt sich im Verdichtungstakt des betreffenden Zylinders durch den vergrößerten Anteil an inerten Bestandteilen in der Zylinderladung eine gesenkte Temperatur bei der Verbrennung.

Durch einen variablen Ventiltrieb können die Öffnungs- und Schließzeiten und / oder die Ventilerhebungskurven - kurz die Betätigungscharakteristik - der Einlassventile verändert werden. Somit ist die Betätigungscharakteristik der Einlassventile von der Vorgabe der Nockenwelle entkoppelt oder zumindest teilweise entkoppelt.

Zur Ausschöpfung der Vorteile der Erfindung ist ein variabler Ventiltrieb mit zylinderindividueller Ansteuerung der Einlassventile erforderlich.

In beiden Verfahrensvarianten kann erfindungsgemäß eine Maßnahme zur Leistungskompensation gesetzt werden, wenn die Leistungsabgabe der Brennkraftmaschine konstant gehalten werden soll.

Die Leistungskompensation kann so erfolgen, dass jene Zylinder, die weiter von der Klopfgrenze entfernt sind, längere Einlassventilöffnungszeiten erhalten, wodurch sich deren Leistungsbeitrag erhöht. In diesem Fall ist also die Leistungskompensation eine zylinderindividuelle Maßnahme.

Die Maßnahme zur Leistungskompensation kann auch in einer Erhöhung des Ladedrucks der Brennkraftmaschine bestehen, d.h. hier wird eine globale Maßnahme, die alle Kolben-Zylindereinheiten betrifft, gesetzt.

In beiden Fällen können die Zündzeitpunkte beibehalten werden.

Die Erfindung richtet sich insbesondere auf einen Volllastbereich einer Brennkraftmaschine.

Bevorzugt ist vorgesehen, dass die Brennkraftmaschine mit Miller-Steuerzeiten betrieben wird.

Die Erfindung eignet sich besonders für stationäre Brennkraftmaschinen, insbesondere mit einem Generator zu einem Genset gekoppelte Brennkraftmaschinen, insbesondere Gasmotoren.

Die Erfindung wird durch die Figuren näher erläutert. Dabei zeigt:
- Fig. 1: Eine schematische Darstellung einer Brennkraftmaschine
- Fig. 2: Eine schematische Darstellung einer Brennkraftmaschine in einem weiteren Ausführungsbeispiel
- Fig. 3: Ventilerhebungskurven eines Einlassventils

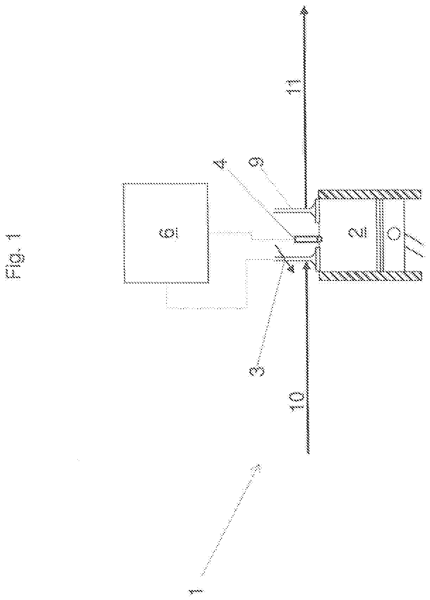

Figur 1 zeigt schematisch eine Brennkraftmaschine 1 in einem ersten Ausführungsbeispiel, wobei nur ein Zylinder 2 dargestellt ist. In der Praxis weisen Brennkraftmaschinen oft eine Vielzahl von Zylindern 2 auf. Über einen Einlasskanal 10 kann ein Kraftstoff-Luft-Gemisch in einen im Zylinder 2 ausgebildeten Brennraum treten. Die Menge und die zeitliche Charakteristik des Eintritts von Kraftstoff-Luft-Gemisch erfolgt über ein variabel aktuierbares Einlassventil 3. In anderen Worten ist an der Brennkraftmaschine 1 ein variabler Ventiltrieb realisiert. Die Betätigungscharakteristik des Einlassventils 3 ist von einer eine Steuer- / Regelvorrichtung 6 veränderbar.

Über einen Klopfsensor 4 sind für das Klopfen der Brennkraftmaschine 1 charakteristische Signale an die Steuer- / Regelvorrichtung 6 meldbar. Der Klopfsensor 4 kann beispielsweise als Körperschallsensor ausgeführt sein.

Aus dem Brennraum der Brennkraftmaschine 1 strömt Abgas über ein Auslassventil 9 in einen Auslasskanal 11.

Wird nun vom Klopfsensor 4 im Zylinder 2 Klopfen detektiert, kann die Steuer- / Regelvorrichtung 6 das Einlassventil 3 so ansteuern, dass es gegenüber dem letzten Verbrennungszyklus (bei welchem ja Klopfen detektiert wurde) früher schließt. Durch früheres Schließen des Einlassventils 3 verringert sich die an der Kompression teilnehmende Ladung im Zylinder 2. Somit wird für den nächsten Verbrennungszyklus die Temperatur der Ladung des als klopfend erkannten Zylinders 2 gegenüber dem letzten Verbrennungszyklus gesenkt und das Klopfen im betroffenen Zylinder reduziert.

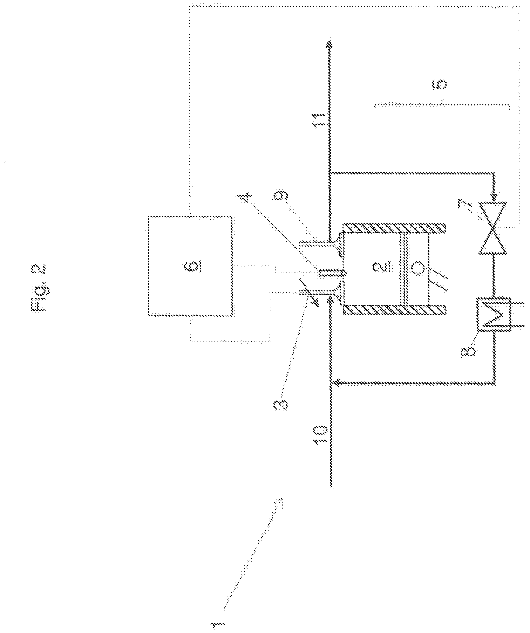

Figur 2 zeigt schematisch eine Brennkraftmaschine 1 in einem weiteren Ausführungsbeispiel, wobei zusätzlich zum Ausführungsbeispiel von Figur 1 eine Abgasrückführung 5 vorgesehen ist. Zum variablen Ventiltrieb gilt das für Figur 1 gesagte.
Die Abgasrückführung 5 kann Abgas vom Auslasskanal 11 abzweigen und wieder in den Einlasskanal 10 leiten. Die Abgasrückführung 5 umfasst neben der Abgasrückführungsleitung 12 ein regelbares Ventil 7 und einen Kühler 8. Durch den als Wärmetauscher ausgeführten Kühler 8 kann die Temperatur des abgezweigten und wieder dem Einlasskanal 10 zugeführten Abgases gesenkt werden. Die Menge an rückgeführtem Abgas ist über die Steuer- / Regelvorrichtung 6 variierbar.

Wird nun bei einer Brennkraftmaschine 1 der vorliegenden Form, also mit gekühlter bzw. kühlbarer Abgasrückführung 5 vom Klopfsensor 4 im Zylinder 2 Klopfen detektiert, kann die Steuer- / Regelvorrichtung 6 das Einlassventil 3 so ansteuern, dass es gegenüber dem letzten Verbrennungszyklus (bei welchem ja Klopfen detektiert wurde) später schließt. Gemäß dieser Variante ist also vorgesehen, die Temperatur der Zylinderladung dadurch zu senken (und damit Klopfen zu vermeiden), indem dem betreffenden Zylinder 2 eine gegenüber dem vergangenen Verbrennungszyklus vergrößerte Menge an gekühltem Abgas zugeführt wird. Daraus ergibt sich im Verdichtungstakt des betreffenden Zylinders 2 durch den vergrößerten Anteil an inerten Bestandteilen in der Zylinderladung eine gegenüber dem vergangenen Verbrennungszyklus gesenkte Temperatur während der Verbrennung, wodurch der betroffene Zylinder 2 weniger zum Klopfen neigt.

Die Signalverbindungen der Steuer- / Regelvorrichtung 6 zum variabel aktuierbaren Einlassventil 3, dem Klopfsensor 4 und dem Ventil 7 der Abgasrückführung 5 sind strichliert dargestellt

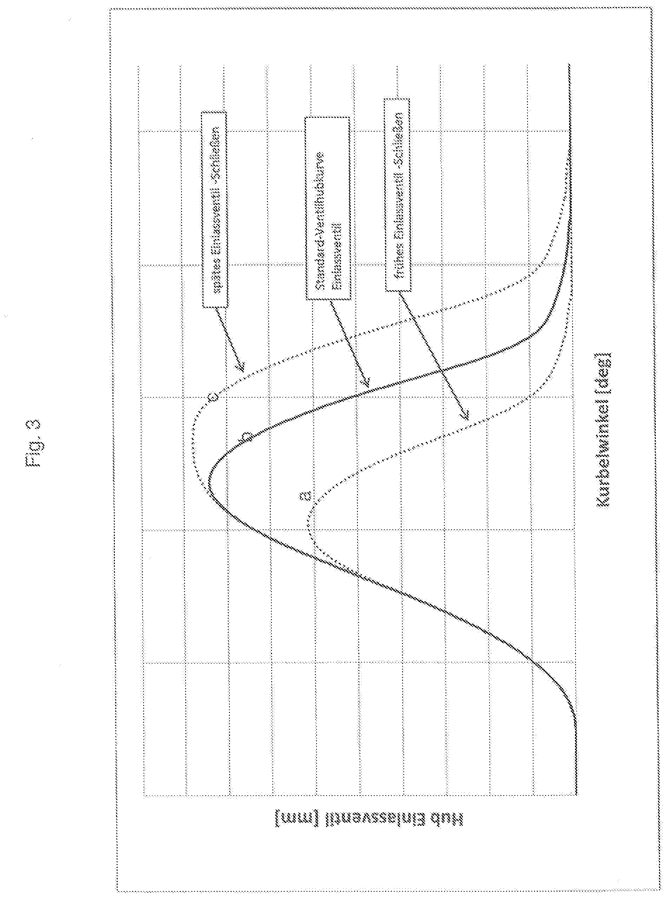

Figur 3 zeigt drei Ventilhubkurven (auch: Ventilerhebungskurven) a, b, c von Einlassventilen 3 gemäß der der zwei diskutierten Ausführungsbeispiele sowie eines Ausgangszustandes.

Die Kurve a repräsentiert die Ventilhubkurve für den Fall, bei welchem durch früheres Einlassventil-Schließen die Temperatur der Zylinderladung gesenkt und solchermaßen Klopfen vermieden wird.

Die Kurve b repräsentiert die Ventilhubkurve im Normalbetrieb.

Die Kurve c repräsentiert die Ventilhubkurve für den Fall, bei welchem durch späteres Einlassventil-Schließen in Zusammenhang mit einer gekühlten Abgasrückführung 5 die Temperatur der Zylinderladung gesenkt und solchermaßen Klopfen vermieden wird.

Man erkennt, dass durch die Maßnahmen der Ventilöffnungszeitpunkt unverändert bleiben kann.

### Liste der verwendeten Bezugszeichen:

- 1: Brennkraftmaschine
- 2: Zylinder
- 3: Einlassventil
- 4: Klopfsensor
- 5: Abgasrückführung (AGR)
- 6: Steuer- / Regelvorrichtung
- 7: Ventil
- 8: Kühler / Wärmetauscher
- 9: Auslassventil
- 10: Einlasskanal
- 11: Auslasskanal
- 12: Abgasrückführungsleitung

## Patentansprüche

1. Verfahren zur Klopfregelung einer Brennkraftmaschine (1) mit
- wenigstens einem Zylinder (2), dem zumindest ein Einlassventil (3) zugeordnet ist,
- einem variablen Ventiltrieb (5) zur zyklus- und zylinderindividuellen Zumessung einer Ladung von Kraftstoff-Luft-Gemisch an den wenigstens einen Zylinder (2) mittels des zumindest einen Einlassventils (3),
- wenigstens einem an einem Zylinder (2) angeordneten Klopfsensor (4) zur Detektion von Klopfen des jeweiligen Zylinders (2),
wobei bei Auftreten von Klopfen in wenigstens einem Zylinder (2) durch die Veränderung der Öffnungs- und Schließzeiten und/oder der Ventilerhebungskurven des zu dem als klopfend erkannten Zylinder (2) zugehörigen Einlassventils (3) dieses solchermaßen aktuiert wird, dass die Temperatur der Ladung des als klopfend erkannten Zylinders (2) gesenkt wird, das Klopfen in dem Zylinder (2) reduziert wird, **dadurch gekennzeichnet, dass** die Brennkraftmaschine (1) zusätzlich eine gekühlte Abgasrückführung (5) umfasst, über welche den Zylindern (2) der Brennkraftmaschine (1) über die Einlassventile (3) gekühltes Abgas zugeführt wird und das Aktuieren des zu dem als klopfend erkannten Zylinder (2) zugehörigen Einlassventils (3) ein späteres Schließen des Einlassventils umfasst.

2. Verfahren nach Anspruch 1, **dadurch gekennzeichnet, dass** bei Aktuieren des zu dem als klopfend erkannten Zylinder (2) zugehörigen Einlassventils (3), eine zylinderindividuelle und/oder eine globale Maßnahme für eine Leistungskompensation der Brennkraftmaschine getroffen wird.

3. Verfahren nach Anspruch 1 oder 2, wobei das Auftreten von Klopfen durch wenigstens einen Klopfsensor (4) in dem wenigstens einen Zylinder (2) festgestellt wird.

4. Brennkraftmaschine (1) mit
- wenigstens einem Zylinder (2), dem zumindest ein Einlassventil (3) zugeordnet ist,
- einem variablen Ventiltrieb (5) zur zyklus- und zylinderindividuellen Zumessung einer Ladung von Kraftstoff-Luft-Gemisch an den wenigstens einen Zylinder (2) mittels des zumindest einen Einlassventils (3),
- wenigstens einem an einem Zylinder (2) angeordneten Klopfsensor (4) zur Detektion von Klopfen des jeweiligen Zylinders (2),
- einer Steuer- / Regelvorrichtung (6) zur zyklus- und zylinderindividuellen Steuerung / Regelung des wenigstens einen Einlassventils (3), wobei die Steuer- / Regelvorrichtung (6) dazu konfiguriert ist, bei Auftreten von Klopfen in einem Zylinder (2) durch die Veränderung der Öffnungs- und Schließzeiten und / oder der Ventilerhebungskurven des zu dem als klopfend erkannten Zylinder (2) gehörigen Einlassventils (3) dieses so aktuiert wird, dass die Temperatur der Ladung des als klopfend erkannten Zylinders (2) gesenkt wird, wodurch das Klopfen in dem Zylinder (2) reduziert wird, **dadurch gekennzeichnet, dass** sie weiters eine gekühlte Abgasrückführung (5) umfasst, über welche den Zylindern (2) der Brennkraftmaschine (1) über die Einlassventile (3) gekühltes Abgas zuführbar ist, und das Aktuieren des zu dem als klopfend erkannten Zylinder (2) zugehörigen Einlassventils (3) ein späteres Schließen des Einlassventils umfasst.

5. Brennkraftmaschine (1) nach Anspruch 4, weiters umfassend, dass die Steuer- / Regelvorrichtung (6) dazu konfiguriert ist, bei Auftreten von Klopfen in einem Zylinder (2), eine zylinderindividuelle und/oder eine globale Maßnahme für eine Leistungskompensation der Brennkraftmaschine zu treffen.

## Claims

1. Method for the knock control of an internal combustion engine (1) having
- at least one cylinder (2), to which at least one intake valve (3) is assigned,
- a variable valve train (5) for the cycle-specific and cylinder-specific metering of a charge of fuel-air-mixture to the at least one cylinder (2) by means of the at least one intake valve (3),
- at least one knock sensor (4) arranged on a cylinder (2) for detecting the knocking of the respective cylinder (2),
wherein if knocking occurs in at least one cylinder (2) by changing the opening and closing times and/or the valve elevation curves of the intake valve (3) associated with the cylinder (2) detected as knocking, the intake valve is actuated such that the temperature of the charge of the cylinder (2) detected as knocking is lowered, the knocking in the cylinder (2) is reduced,
**characterised in that** the internal combustion engine (1) additionally comprises a cooled exhaust gas recirculation (5), by means of which cooled exhaust gas is supplied to the cylinders (2) of the internal combustion engine (1) via the intake valves (3) and the actuation of the intake valve (3) associated with the cylinder (2) detected as knocking includes a later closing of the intake valve.

2. Method according to claim 1, **characterised in that** the actuation of the intake valve (3) associated with the cylinder (2) detected as knocking includes a cylinder-specific and/or a global measure for compensating the output of the internal combustion engine.

3. Method according to claim 1 or 2, wherein the occurrence of knocking is detected by at least one knock sensor (4) in the at least one cylinder (2).

4. Internal combustion engine (1) having
- at least one cylinder (2), to which at least one intake valve (3) is assigned,
- a variable valve train (5) for the cycle-specific and cylinder-specific metering of a charge of fuel-air-mixture to the at least one cylinder (2) by means of the at least one intake valve (3),
- at least one knock sensor (4) arranged on a cylinder (2) for detecting the knock of the respective cylinder (2),
- a control/regulating device (6) for the cycle-specific and cylinder-specific control/regulation of the at least one intake valve (3),
wherein the control/regulating device (6) is configured, when knocking occurs in a cylinder (2), by changing the opening and closing times and/or the valve elevation curves of the intake valve (3) associated with the cylinder (2) detected as knocking, to actuate the intake valve, so that the temperature of the charge of the cylinder (2) detected as knocking is reduced, whereby the knocking in the cylinder (2) is reduced, **characterised in that** it also comprises a cooled exhaust gas recirculation (5) via which cooled exhaust gas can be returned to the cylinders (2) of the internal combustion engine (1) via the intake valves (3), and the actuation of the intake valve (3) associated with the cylinder (2) detected as knocking includes a later closure of the intake valve.

5. Internal combustion engine (1) according to claim 4, also including that the control/regulating device (6) is configured, if knocking occurs in a cylinder (2), to perform a cylinder-specific and/or a global measure for compensating the output of the internal combustion engine.

## Revendications

1. Procédé pour la régulation anti-cliquetis d'un moteur à combustion interne (1) avec
- au moins un cylindre (2), auquel est associée au moins une soupape d'admission (3),
- une distribution (5) variable pour doser, de manière spécifique au cycle et au cylindre, une charge de mélange carburant-air au niveau de l'au moins un cylindre (2) au moyen de l'au moins une soupape d'admission (3),
- au moins un capteur de cliquetis (4) agencé au niveau d'un cylindre (2) et destiné à la détection de cliquetis du cylindre (2) respectif,
dans lequel, à l'apparition de cliquetis dans au moins un cylindre (2), par la modification des temps d'ouverture et de fermeture et/ou des courbes d'ouverture effective de soupape de la soupape d'admission (3) associée au cylindre (2) détecté comme présentant un cliquetis, ladite soupape est commandée de telle sorte que la température de la charge du cylindre (2) détecté comme présentant un cliquetis est abaissée, le cliquetis dans le cylindre (2) est réduit, **caractérisé en ce que** le moteur à combustion interne (1) comprend en plus un recyclage de gaz d'échappement (5) refroidi par l'intermédiaire duquel du gaz d'échappement refroidi est renvoyé aux cylindres (2) du moteur à combustion interne (1) par l'intermédiaire des soupapes d'admission (3) et la commande de la soupape d'admission (3) associée au cylindre (2) détecté comme présentant un cliquetis comprend une fermeture plus tardive de la soupape d'admission.

2. Procédé selon la revendication 1, **caractérisé en ce que**, lors de la commande de la soupape d'admission (3) associée au cylindre (2) détecté comme présentant un cliquetis, une mesure spécifique au cylindre et/ou une mesure globale est prise en vue d'une compensation de puissance du moteur à combustion interne.

3. Procédé selon la revendication 1 ou 2, dans lequel l'apparition de cliquetis est constatée par au moins un capteur de cliquetis (4) dans l'au moins un cylindre (2).

4. Moteur à combustion interne (1) avec
- au moins un cylindre (2), auquel au moins une soupape d'admission (3) est associée,
- une distribution (5) variable pour doser, de manière spécifique au cycle et au cylindre, une charge de mélange carburant-air au niveau de l'au moins un cylindre (2) au moyen de l'au moins une soupape d'admission (3),
- au moins un capteur de cliquetis (4) agencé au niveau d'un cylindre (2) et destiné à la détection de cliquetis du cylindre (2) respectif,
- un dispositif de commande/régulation (6) pour la commande/régulation, spécifique au cycle et au cylindre, de l'au moins une soupape d'admission (3),
dans lequel le dispositif de commande/régulation (6) est configuré de telle sorte que, à l'apparition de cliquetis dans un cylindre (2), par la modification des temps d'ouverture et de fermeture et/ou des courbes d'ouverture effective de soupape de la soupape d'admission (3) associée au cylindre (2) détecté comme présentant un cliquetis, ladite soupape est commandée de telle sorte que la température de la charge du cylindre (2) détecté comme présentant un cliquetis est abaissée et le cliquetis dans le cylindre (2) est ainsi réduit, **caractérisé en ce qu'**il comprend en plus un recyclage de gaz d'échappement (5) refroidi par l'intermédiaire duquel du gaz d'échappement refroidi peut être renvoyé aux cylindres (2) du moteur à combustion interne (1) par l'intermédiaire des soupapes d'admission (3) et la commande de la soupape d'admission (3) associée au cylindre (2) détecté comme présentant un cliquetis comprend une fermeture plus tardive de la soupape d'admission.

5. Moteur à combustion interne (1) selon la revendication 4, comprenant en plus le fait que le dispositif de commande/régulation (6) est configuré pour, à l'apparition de cliquetis dans un cylindre (2), prendre une mesure spécifique au cylindre et/ou une mesure globale en vue d'une compensation de puissance du moteur à combustion interne.
